(19) Europäisches Patentamt
European Patent Office
Office européen des brevets

(11) **EP 2 031 416 B1**

(12) **EUROPÄISCHE PATENTSCHRIFT**

(45) Veröffentlichungstag und Bekanntmachung des Hinweises auf die Patenterteilung:
**26.11.2014 Patentblatt 2014/48**

(51) Int Cl.:
**G01S 13/34** *(2006.01)* **G01S 13/38** *(2006.01)*
**G01S 7/35** *(2006.01)*

(21) Anmeldenummer: **08162872.9**

(22) Anmeldetag: **25.08.2008**

(54) **Mikrowellen-Näherungssensor und Verfahren zur Ermittlung des Abstands zwischen einem Messkopf und einem Zielobjekt**

Microwave proximity sensor and method for calculating the distance between a measuring head and a target object

Capteur de rapprochement à micro-ondes et procédé de détermination de la distance entre une tête de mesure et un objet cible

(84) Benannte Vertragsstaaten:
**CH DE FR GB IT LI**

(30) Priorität: **30.08.2007 DE 102007042954**

(43) Veröffentlichungstag der Anmeldung:
**04.03.2009 Patentblatt 2009/10**

(73) Patentinhaber: **BALLUFF GmbH**
**73765 Neuhausen (DE)**

(72) Erfinder:
• **Fericean, Sorin Dr.**
**71229 Leonberg (DE)**
• **Dorneich, Albert**
**73760 Ostfildern (DE)**
• **Droxler, Reinhard**
**72800 Eningen (DE)**
• **Kräter, Daniel**
**75223 Niefern (DE)**
• **Fend, Norbert**
**9492 Eschen (LI)**

(74) Vertreter: **Hoeger, Stellrecht & Partner**
**Patentanwälte**
**Uhlandstrasse 14c**
**70182 Stuttgart (DE)**

(56) Entgegenhaltungen:
| | |
|---|---|
| **EP-A- 1 329 740** | **EP-A1- 1 744 176** |
| **WO-A-95/12824** | **DE-A1- 4 104 792** |
| **DE-A1- 4 229 916** | **DE-A1- 4 244 608** |
| **DE-C1- 19 533 125** | **JP-A- 8 186 447** |
| **US-A- 5 596 325** | **US-A- 6 085 151** |

EP 2 031 416 B1

**Beschreibung**

Die Erfindung betrifft einen Mikrowellen-Näherungssensor, umfassend einen Messkopf mit einem Sender für Mikrowellenstrahlung, wobei der Sender eine solche Leistung aufweist, dass Abstände zwischen Messkopf und Zielobjekt unterhalb von 15 m detektierbar sind, und einen Empfänger für an einem Zielobjekt reflektierte Mikrowellenstrahlung, eine Frequenzmodulationseinrichtung, mit welcher die Frequenz von über den Sender emittierter Mikrowellenstrahlung modulierbar ist, und eine Auswertungseinrichtung mit einer Mischungseinrichtung, durch welche mindestens ein Mischungssignal aus einem Sendesignal und einem Empfangssignal erzeugbar ist, wobei durch Auswertung des mindestens einen Mischungssignals ein Abstand zwischen dem Messkopf und dem Zielobjekt berechenbar ist.

Die Erfindung betrifft ferner ein Verfahren zur Ermittlung des Abstands zwischen einem Messkopf eines Mikrowellen-Näherungssensors und einem Zielobjekt.

Über Mikrowellen-Näherungssensoren lässt sich die Position bzw. die Annäherung eines Zielobjekts (Targets) detektieren, wenn das Zielobjekt elektrisch leitend ist oder eine genügend große Dielektrizitätskonstante aufweist. Es ist dabei eine berührungslose Detektierbarkeit ermöglicht. Beispielsweise lassen sich auch Glasgegenstände detektieren. Magnetische Eigenschaften des Gegenstands beeinflussen das Detektionsergebnis nicht. Es lässt sich eine Positionsdetektion und/oder Wegdetektion durchführen, die im Wesentlichen unabhängig vom Material des zu detektierenden Gegenstands ist.

Aus der DE 10 2004 062 801 A1 ist ein Hochfrequenz-Positions-/Wegsensor zur Detektion der Annäherung eines Gegenstands mit einem Detektionsbereich in einem Nahfeld bekannt, welcher einen Hochfrequenzsender und einen Hochfrequenzempfänger umfasst, wobei der Hochfrequenzsender und der Hochfrequenzempfänger so angeordnet und ausgebildet sind, dass eine Hauptsenderichtung und eine Hauptempfangsrichtung in einem Winkel zueinander liegen.

Aus der DE 198 33 220 A1 ist eine Abstandsmessvorrichtung mit einer Sensoreinrichtung und einer Auswerteelektronik bekannt, bei der die Sensor-einrichtung zumindest eine Koppelsonde zur Einspeisung eines Sendesignals in eine Leitungsstruktur aufweist.

Aus der DE 102 05 904 ist eine Abstandsmessvorrichtung mit einer Auswerteelektronik und einer Sensoreinrichtung bekannt, die zumindest eine Koppelsonde zur Einspeisung eines Sendesignals in eine Leitungsstruktur mit Reflexionskörper aufweist, bei der die Leitungsstruktur einen Einspeiseblock mit einem Einspeisungsbereich aufweist, der einen HF-Transceiver über einen Wellenleiter mit dielektrischem Haltesystem mit der Koppelsonde verbindet.

Aus der DE 199 03 183 A1 ist eine Abstandsmessvorrichtung mit einem Sensor und einer Auswerteelektronik bekannt, bei der der Sensor als Antenne einen einseitig offenen Hohlleiter aufweist, dessen offene Seite mit einem Dämpfungsglied abgeschlossen ist.

Aus der DE 198 07 593 A1 ist eine Abstandsmessvorrichtung mit einem Sensor und einer Auswerteelektronik bekannt, bei der der Sensor einen Resonator in Form eines Hohlraumresonators aufweist.

Aus der EP 1 000 314 B1 ist eine Abstandsmessvorrichtung mit einem Sensor und einer Auswerteelektronik bekannt, bei der der Sensor einen Resonator in Form eines Hohlraumresonators mit Resonatorgehäuse aufweist, wobei der Resonator eine coplanare Schlitzkopplung mit Einkopplungsleitung aufweist und die Einkopplungsleitung an dem Resonatorgehäuse abgeschlossen ist.

Aus der DE 41 04 792 A1 ist ein FMCW-Radarsystem mit linearer Frequenzmodulation bekannt.

Aus der DE 10 2004 041 821 A1 ist eine Vorrichtung zur Sicherung eines maschinell gesteuerten Handhabungsgeräts mit beweglichen Teilen, mit einer Sicherheitssensorik zur Detektion von Objekten im Arbeitsraum des Handhabungsgeräts, mit einer Sicherheitssteuerung, die mit der Handhabungsgeräte-Steuerung zusammenwirkt und dabei in Abhängigkeit von Signalen der Sicherheitssensorik sicherheitsrelevante Handhabungsgeräte-Funktionen steuert, bekannt. Die Sicherheitssensorik umfasst berührungslose Näherungssensoren, so dass ein sicherheitsrelevanter Teil des Arbeitsraums des Handhabungsgeräts durch die Detektionsbereiche der Näherungssensoren erfasst wird. Die Näherungssensoren können Ultraschallsensoren sein oder Mikrowellensensoren, welche nach der FMCW-Methode arbeiten.

Aus der DE 195 33 125 C1 ist eine Vorrichtung zur Abstandsmessung bekannt, bei der eine Signalquelle vorgesehen ist, die ein Mikrowellensignal erzeugt und bei der eine frequenzmodulierte Signalquelle vorgesehen ist, die ein frequenzmoduliertes Signal erzeugt. Ein erster Mischer bildet aus den Mikrowellensignalen und dem frequenzmodulierten Signal ein erstes Mischsignal. Eine Sende-/Empfangseinheit sendet das erste Mischsignal aus und empfängt das an einem Objekt reflektierte Signal. Es ist ein zweiter Mischer vorgesehen, der aus dem empfangenen Signal und dem Mikrowellensignal ein zweites Mischsignal bildet. Ein Verzögerungselement verzögert das zweite Mischsignal um eine Zeitdauer. Ein dritter Mischer bildet aus dem verzögerten zweiten Mischsignal und dem frequenzmodulierten Signal ein drittes Mischsignal, welches ein Maß für den Abstand des Objekts ist.

Aus der US 6,085,151 ist ein Kollisionsdetektionssystem für ein Fahrzeug bekannt, welches ein Radarsender-/Empfänger-Modul umfasst.

Aus der DE 42 44 608 A1 ist ein computerisiertes Radarverfahren zur Messung von Abständen und Relativgeschwindigkeiten zwischen einem Fahrzeug und in Fahrtrichtung vor ihm befindlichen Hindernissen mit Aussendung mittels eines Oszillators erzeugter Sendesignale, Empfangen an den Hindernissen reflektierter Signale, Mischen der reflektierten Signale mit den Sendesignalen zur Gewinnung von Inphase- und Quadraturphasesignalen und Verarbeitung dieser Signale zu Ausgangssignalen für die Abstände und Relativgeschwindigkeiten der Hindernisse bekannt.

Aus der EP 1 329 740 A2 ist ein Radarsystem für die Detektion der Anwesenheit von Hindernissen bekannt.

Aus der US 5,596,325 ist FMCW-Radartransceiversystem bekannt.

Aus der WO 95/12824 ist ein Radargerät mit mindestens einer Antenne zum Senden und Empfangen von Radarsignalen, mit einem Signalgenerator zur Speisung der Antenne, mit Misch- und Filterermitteln zur Erzeugung eines Mischsignals und mit einem Signalprozessor bekannt.

Aus der DE 42 29 916 A1 ist ein Verfahren zum Nachweisen von Burst-Signalen in einem sowohl Burst-Signale als auch Rauschen enthaltenden Eingangsignal bekannt.

Aus der JP 08186447 ist ein Phasendetektionsschaltkreis für einen Radarempfänger bekannt.

Der Erfindung liegt die Aufgabe zugrunde, einen Mikrowellen-Näherungssensor und ein Verfahren zur Bestimmung des Abstands zwischen einem Zielobjekt und einem Messkopf eines Mikrowellen-Näherungssensors der eingangs genannten Art bereitzustellen, welcher einfach aufgebaut ist bzw. welcher sich auf einfache Weise realisieren lässt.

Diese Aufgabe wird bei dem eingangs genannten Mikrowellen-Näherungssensor erfindungsgemäß dadurch gelöst, dass die Auswertungseinrichtung aus dem mindestens einen Mischungssignal das Frequenzspektrum berechnet, dass die Auswertungseinrichtung einen Filter aufweist, durch den mindestens ein Mischungssignal mit einer Hauptfrequenz ausfilterbar ist, wobei das mindestens eine Mischungssignal mit der Hauptfrequenz ein Signal mit der größten Amplitude im Frequenzspektrum ist und dass die Auswertungseinrichtung so ausgebildet ist, dass sie eine Phase eines Verhältnisses eines ersten Mischungssignals und eines zweiten Mischungssignals nach Rücktransformation in den Zeitraum bestimmt, wobei das erste Mischungssignal und das zweite Mischungssignal phasenverschoben sind, und der Abstand zwischen dem Messkopf und dem Zielobjekt aus der Phase bestimmt wird.

Der entsprechende Mikrowellen-Näherungssensor lässt sich mit kleiner Sendeleistung (beispielsweise 14 dBm EIRP) betreiben, da ein kontinuierlicher Betrieb möglich ist. Der Stromverbrauch ist relativ gering. Der Mikrowellen-Näherungssensor lässt sich einfach aufbauen. Es ist im Gegensatz zu einer Laufzeitmessung nicht notwendig, kurze Zeiten zu messen.

Durch eine geeignete Auswertung ist es möglich, aus einem Mischungssignal den Abstand zwischen dem Messkopf und dem Zielobjekt zu berechnen, auch wenn das Mischungssignal nur wenige Perioden aufweist bzw. keine vollständige Periode aufweist.

Der erfindungsgemäße Mikrowellen-Näherungssensor ist besonders geeignet für einen Abstandsmessbereich zwischen ca. 2 m und ca. 10 m, wobei sich eine Auflösung in der Größenordnung von ca. 3 mm oder 4 mm oder besser erreichen lässt.

Der erfindungsgemäße Mikrowellen-Näherungssensor lässt sich auf vielfältige Weise einsetzen. Beispielsweise lässt er sich zur Detektion der Kolbenposition bzw. des Kolbenabstands bei einem hydraulischen Zylinder oder pneumatischen Zylinder einsetzen.

Insbesondere liegt eine minimale Frequenz und eine maximale Frequenz der gesendeten Mikrowellenstrahlung im Bereich zwischen 300 MHz bis 300 GHz vor.

Es ist günstig, wenn die minimale Frequenz und die maximale Frequenz der gesendeten Mikrowellenstrahlung und insbesondere der gesamte Frequenzbereich der gesendeten Mikrowellenstrahlung in einem ISM-Band liegt. Dadurch lässt sich der Mikrowellen-Näherungssensor auf einfache Weise in ein Gesamtsystem integrieren. Solche Mikrowellen-Näherungssensoren sind in der Industrie uneingeschränkt einsetzbar.

Eine Frequenz der Frequenzmodulation ist sehr viel kleiner als eine maximale Frequenz der gesendeten Mikrowellenstrahlung. Die Frequenz der Frequenzmodulation liegt in der Größenordnung von 10 Hz bis 10 kHz. Die Mikrowellenfrequenz liegt dagegen in einem MHz bis GHz-Bereich. Insbesondere ist die Frequenz der Frequenzmodulation mindestens um einen Faktor $10^4$ kleiner als die maximale Frequenz der gesendeten Mikrowellenstrahlung. Es ergibt sich dadurch eine einfache Auswertbarkeit. Ferner lässt sich dann die Frequenzmodulation auf einfache Weise durchführen.

Vorzugsweise weist der Sender eine solche Leistung auf, dass Abstände zwischen Messkopf und Zielobjekt unterhalb von 15 m detektierbar sind, beispielsweise 10 - 20 dBm EIRP. Dadurch lässt sich eine Abstandsermittlung an einem Maschinenelement durchführen.

Ganz besonders vorteilhaft ist es, wenn ein Messbereich des Mikrowellen-Näherungssensors eine Frequenz des mindestens einen Mischungssignals und eine Frequenz der Frequenzmodulation die gleiche Größenordnung haben. Die gleiche Größenordnung bedeutet dabei, dass sich die beiden Größen auch um einen Faktor 10 noch unterscheiden dürfen. Es ergibt sich dann eine einfache Auswertbarkeit.

Günstig ist es, wenn ein Transceiver (mit einem Oszillator oder angekoppelt an einen Oszillator) vorhanden ist, welcher dem Sender Sendesignale bereitstellt. Über den Transceiver ist dann der Frequenzverlauf der ausgesandten Mikrowellenstrahlung steuerbar. Ferner kann an dem Transceiver eine Weiterverarbeitung von Signalen erfolgen; an dem Transceiver ist es beispielsweise möglich, ein Sendesignal und ein Empfangssignal zu mischen, um das mindestens eine Mischungssignal zu erzeugen.

Insbesondere stellt der Transceiver dann das mindestens eine Mischungssignal bereit, welches beispielsweise direkt oder nach vorhergehender Signalaufbereitung durch einen Prozessor weiter ausgewertet wird.

Bei einer Ausführungsform weist der Transceiver einen Splitter auf, mittels welchem Sendesignale auf einen Sendezweig und einen Empfangszweig aufteilbar sind. Mit einem Sendesignal auf dem Sendezweig lässt sich der Sender ansteuern, so dass dieser Mikrowellenstrahlung mit einem entsprechenden Frequenzverlauf emittieren kann. Das Sendesignal in dem Empfangszweig lässt sich zur Bildung des mindestens einen Mischungssignals nutzen.

Günstig ist es, wenn die Auswertungseinrichtung einen Prozessor aufweist, welcher an einen Transceiver gekoppelt ist. Der Prozessor kann die von dem Transceiver bereitgestellten Signale entsprechend auswerten, um den Abstand zwischen dem Messkopf und dem Zielobjekt zu bestimmen.

Bei einer Ausführungsform ist die Frequenzmodulationseinrichtung an einen Rampengenerator gekoppelt oder umfasst einen Rampengenerator. Der Rampengenerator erzeugt einen zeitlichen Spannungsverlauf wie beispielsweise eine Dreieckspannung oder als Sonderfall einer Dreieckspannung einen sägezahnförmigen Spannungsverlauf. Über diese Dreieckspannung lässt sich ein spannungsgesteuerter Oszillator ansteuern, wobei der Spannungsverlauf den Frequenzverlauf bestimmt.

Günstig ist es, wenn die Frequenzmodulationseinrichtung einen spannungsgesteuerten Oszillator ansteuert. Dadurch lässt sich auf einfache Weise eine Frequenzmodulation der von dem Sender emittierten Mikrowellenstrahlung erreichen.

Günstig ist es, wenn der Sender in einem Betriebsmodus kontinuierlich Mikrowellenstrahlung sendet. Dadurch lässt sich die für den Sender erforderliche Leistung relativ gering halten.

Günstig ist es, wenn die Frequenzmodulationseinrichtung einen zeitlichen Frequenzverlauf bereitstellt, welcher derart ist, dass eine nicht lineare Kennlinie eines Oszillators im Wesentlichen kompensiert ist. Die Kennlinie eines Oszillators und insbesondere spannungsgesteuerten Oszillators ist eine Frequenz-Spannungs-Kennlinie; diese muss nicht unbedingt linear sein. Die Spannung, mit welcher der Oszillator angesteuert wird, kann so sein, dass sie einen nicht linearen Kennlinienverlauf berücksichtigt. Dadurch erhält man auf einfache Weise eine optimierte Abstandsermittlung. Über die Frequenzmodulationseinrichtung lässt sich auch eine Temperaturkompensation realisieren, die die temperaturabhängige Änderung der Oszillatorfrequenz berücksichtigen kann.

Bei einer vorteilhaften Ausführungsform stellt die Frequenzmodulationseinrichtung einen mindestens näherungsweise dreieckförmigen zeitlichen Frequenzverlauf und insbesondere Sägezahn-Frequenzverlauf bereit. Bei einem allgemeinen Dreieckverlauf weist die Frequenz innerhalb einer Periode eine ansteigende Flanke und eine fallende Flanke auf. Bei einem Sägezahnverlauf ist die abfallende Flanke eine Flanke mit (theoretisch) unendlicher Steigung. Beispielsweise kann auch ein dreieckförmiger zeitlicher Frequenzverlauf vorhanden sein, bei dem die ansteigende Flanke eine endliche Steigung und die abfallende Flanke ebenfalls eine endliche Steigung (die beispielsweise betragsmäßig so groß ist wie die Steigung der ansteigenden Flanke) aufweist. Mit einem dreieckförmigen Frequenzverlauf mit steigender und fallender Rampe lassen sich Dopplereffekt-Einflüsse berücksichtigen. Vorzugsweise basiert der sägezahnförmige Frequenzverlauf auf einer unteren Mindestfrequenz, wobei dann periodisch eine maximale Frequenz erreicht wird. Die minimale Frequenz sowie die maximale Frequenz sind dabei Mikrowellenfrequenzen, auf welchen der Sender sendet. Die minimale Frequenz und die maximale Frequenz können so gewählt werden, dass gesetzliche Anforderungen erfüllt sind. Die dreieckförmige Gestalt ist vorzugsweise so, dass sie einen Anstieg mit einem schnellen Abfall aufweist. Über einen dreieckförmigen Frequenzverlauf mit fallender Rampe lassen sich auch Dopplereffekt-Einflüsse aufgrund der Bewegung eines Zielobjekts berücksichtigen.

Das mindestens eine erzeugte Mischungssignal enthält grundsätzlich auch Einflüsse von Mikrowellenstrahlungsreflexionen an Nebenobjekten, d. h. an Objekten außerhalb des Zielobjekts. Solche Einflüsse lassen sich eliminieren, wenn die Auswertungseinrichtung einen Filter aufweist, durch den mindestens ein Mischungssignal mit einer Hauptfrequenz ausfilterbar ist. Beispielsweise wird dazu durch Fourier-Transformation ein Frequenzspektrum erzeugt und dort eine Hauptfrequenz, beispielsweise als diejenige Frequenz mit der größten Amplitude im Frequenzspektrum, ausgefiltert. Durch Rücktransformation ergibt sich ein "reines" Mischungssignal.

Beispielsweise ist das mindestens eine Mischungssignal mit der Hauptfrequenz ein Signal mit der größten Amplitude im Frequenzspektrum.

Es kann vorgesehen sein, dass ein Transceiver ein Mischungssignal oder zwei Mischungssignale bereitstellt. Wenn zwei Mischungssignale bereitgestellt werden, lässt sich beispielsweise auf einfache Weise eine Beeinflussung durch Ausbildung einer stehenden Welle berücksichtigen bzw. verhindern.

Insbesondere sind ein erstes Mischungssignal und ein zweites Mischungssignal phasenverschoben und vorzugsweise um 90° phasenverschoben. Dadurch lässt sich auf einfache Weise aus der Phase eines Verhältnisses des ersten Mischungssignals und des zweiten Mischungssignals der Abstand bestimmen.

Es ist dabei möglich, dass das erste Mischungssignal und das zweite Mischungssignal unabhängig erzeugt sind. Das erste Mischungssignal und das zweite Mischungssignal werden dabei insbesondere unabhängig durch jeweilige Mischung eines Ausgangssignals mit einem Empfangssignal erzeugt. Das Ausgangssignal ist dabei für das erste Mischungssignal und das zweite Mischungssignal unterschiedlich und ist insbesondere ein erstes Signal und ein zweites Signal, welche um 90° zueinander phasenverschoben sind.

Es ist grundsätzlich auch möglich, dass das zweite Mischungssignal aus dem ersten Mischungssignal rechnerisch erzeugt ist, indem das erste Mischungssignal entsprechend als Berechnungsgrundlage verwendet wird. Dies kann vorteilhaft sein, wenn kein gemessenes zweites Mischungssignal existiert oder das gemessene zweite Mischungssignal nicht brauchbar ist.

Es ist dann günstig, wenn das zweite Mischungssignal (welches rechnerisch erzeugt wurde) die Hilbert-Transformierte des ersten Mischungssignals ist. Dadurch kann das zweite Mischungssignal auch dann erzeugt werden, wenn nur eine geringe Anzahl von Perioden oder keine vollständige Periode des ersten Mischungssignals vorliegt.

Günstig ist es, wenn die Auswertungseinrichtung so ausgebildet ist, dass sie eine Phase eines Verhältnisses eines ersten Mischungssignals und eines zweiten Mischungssignals bestimmt und der Abstand zwischen dem Messkopf und dem Zielobjekt aus der Phase bestimmt wird. Durch die Verhältnisbildung ist die Bestimmung unabhängig von den Amplituden der Mischungssignale. Grundsätzlich ist bei idealen Verhältnissen die zeitliche Ableitung der Phase proportional zu dem Abstand. Bei einem solchen Auswertungsverfahren muss das mindestens eine Mischungssignal keine vollständige Periode aufweisen bzw. es genügen wenige Perioden, um eine Auswertbarkeit zu ermöglichen.

Insbesondere weist die Phase eine zeitliche Abhängigkeit auf. Diese ist im Idealfall im Wesentlichen linear.

Ferner ist im Idealfall die zeitliche Ableitung $\dfrac{d\varphi}{dt}$ der Phase mindestens näherungsweise proportional zu einem Abstand zwischen dem Messkopf und dem Zielobjekt.

Günstigerweise ist mindestens ein Anschluss für ein analoges Abstandssignal und/oder für ein digitales Abstandssignal vorgesehen. Dadurch lässt sich die entsprechende Abstandsinformation aus dem Mikrowellen-Näherungssensor auskoppeln.

Es ist möglich, dass ein Mikrowellen-Näherungssensor als Abstands-/Weg-sensor ausgebildet ist, über den sich die absolute Abstandsinformation gewinnen lässt. Er kann auch als Positionsschalter ausgebildet sein, welcher ein binäres Schaltsignal bei Unterschreiten oder Überschreiten eines bestimmten Abstands liefert.

Die eingangs genannte Aufgabe wird bei dem eingangs genannten Verfahren erfindungsgemäß dadurch gelöst, dass aus dem mindestens einen Mischungssignal das Frequenzspektrum berechnet wird und eine Hauptfrequenz des mindestens einen Mischungssignals bestimmt wird, wobei das mindestens eine Mischungssignal bei der Hauptfrequenz ein Signal mit der größten Amplitude im Frequenzspektrum ist, dass ein erstes Mischungssignal und ein zweites Mischungssignal erzeugt werden, welche zueinander phasenverschoben sind und dass die Phase eines Verhältnisses des ersten Mischungssignals und des zweiten Mischungssignals nach Rücktransformation in den Zeitraum bestimmt wird und aus der Phase der Abstand zwischen dem Messkopf und dem Zielobjekt berechnet wird.

Das erfindungsgemäße Verfahren weist die bereits im Zusammenhang mit der erfindungsgemäßen Vorrichtung erläuterten Vorteile auf.

Weitere vorteilhafte Ausgestaltungen wurden ebenfalls bereits im Zusammenhang mit dem erfindungsgemäßen Mikrowellen-Näherungssensor erläutert.

Günstig ist es, wenn eine Hauptfrequenz des mindestens einen Mischungssignals bestimmt wird. Dadurch lässt sich auf einfache Weise der Einfluss von Nebenobjekten, welche außerhalb des Zielobjekts liegen und Mikrowellenstrahlung reflektieren, eliminieren.

Es werden ein erstes Mischungssignal und ein zweites Mischungssignal erzeugt, welche zueinander phasenverschoben sind. Dadurch ergibt sich eine einfache Auswertbarkeit. Durch Verhältnisbildung lässt sich eine Phase bestimmen, welche die Abstandsinformation enthält.

Günstig ist es dann, wenn die Phasenverschiebung 90° ist. Dadurch lässt sich die Auswertung auf einfache Weise durchführen.

Es ist dabei möglich, dass bei einer zweikanaligen Auswertung sowohl das erste Mischungssignal als auch das zweite Mischungssignal durch Mischen des Sendesignals und Empfangssignals erzeugt werden. Das Sendesignal wird dazu zuvor aufbereitet, indem insbesondere ein erstes Signal und ein zweites Signal aus dem Sendesignal erzeugt werden, welche zueinander phasenverschoben sind.

Es ist grundsätzlich auch möglich, dass das zweite Mischungssignal aus dem ersten Mischungssignal durch entsprechende mathematische Operationen erzeugt wird.

Insbesondere wird dann das zweite Mischungssignal durch Hilbert-Transformation aus dem ersten Mischungssignal bestimmt. Durch Hilbert-Transformation kann ein um 90° phasenverschobenes "virtuelles" oder "synthetisches" Mischungssignal erzeugt werden, auch wenn das Ausgangssignal keine vollständige Periode bzw. nur wenige Perioden hat.

Die Hilbert-Transformation kann im Zeitraum oder Frequenzraum durchgeführt werden. Wenn die Hilbert-Transformation im Zeitraum durchgeführt wird, dann lässt sich ein zeitabhängiges zweites Mischungssignal aus dem ersten Mischungssignal erzeugen. Das Frequenzspektrum des ersten Mischungssignals (und des zweiten Mischungssignals) kann erzeugt werden und durch Filterung und Rücktransformation erhält man "bereinigte" Signale. Es ist alternativ auch möglich, dass man aus dem ersten Mischungssignal das Frequenzspektrum bestimmt und dann ein zugehöriges zweites Mischungssignal durch Hilbert-Transformation im Frequenzraum bestimmt. Nach Filterung und insbesondere Filterung von negativen Frequenzen werden durch Rücktransformation in dem Zeitraum das erste Mischungssignal und das zweite Mischungssignal berechnet.

Aus der Phase eines Verhältnisses des ersten Mischungssignals und des zweiten Mischungssignals wird dann der Abstand zwischen dem Messkopf und dem Zielobjekt berechnet. Dadurch lässt sich auf einfache Weise die Abstandsinformation erhalten.

Die nachfolgende Beschreibung bevorzugter Ausführungsformen dient im Zusammenhang mit den Zeichnungen der näheren Erläuterung der Erfindung. Es zeigen:

Figur 1    eine schematische Darstellung eines Ausführungsbeispiel eines erfindungsgemäßen Mikrowellen-Näherungssensors;

Figur 2    eine schematische Darstellung eines Ausführungsbeispiels eines Transceivers des Mikrowellen-Näherungssensors gemäß Figur 1;

Figur 3    eine schematische Darstellung des Frequenzverlaufs in Abhängigkeit einer Varaktor-Spannung;

Figur 4    eine schematische Darstellung eines Frequenzmodulations- verlaufs;

Figur 5    eine schematische Darstellung von Signalverläufen mit Zwischenschritten der Signalauswertung bei einer ein- kanaligen Auswertung;

Figur 6    eine schematische Darstellung von Signalverläufen und von Zwischenschritten bei der Signalauswertung bei einer zwei- kanaligen Auswertung;

Figur 7    eine schematische Darstellung eines ersten Ausführungs- beispiels einer Sender-Empfänger-Einrichtung mit getrenntem Sender und Empfänger; und

Figur 8    ein zweites Ausführungsbeispiel einer Sender-Empfänger-Ein- richtung mit kombinierten Sendern und Empfängern in schematischer Darstellung.

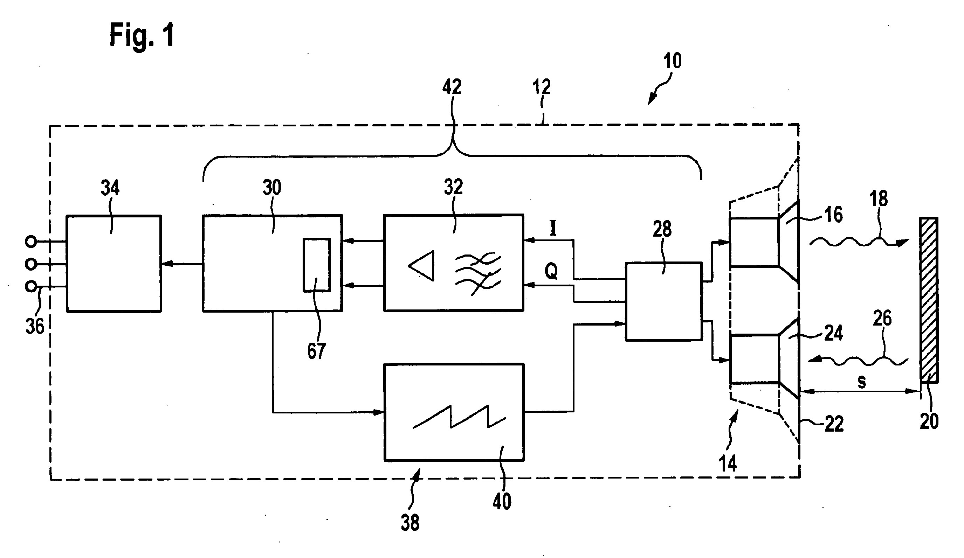

Ein Ausführungsbeispiel eines erfindungsgemäßen Mikrowellen-Näherungssensors, welches in Figur 1 gezeigt und dort mit 10 bezeichnet ist, umfasst ein Gehäuse 12. An oder in dem Gehäuse 12 ist ein Messkopf 14 angeordnet. An dem Messkopf 14 wiederum ist ein Sender 16 positioniert, welcher Mikrowellenstrahlung 18 emittiert. Im Anwendungsfall ist der Messkopf 14 so ausgerichtet, dass der Sender 16 die Mikrowellenstrahlung 18 in Richtung eines Zielobjekts 20 emittiert, dessen Abstand s zu dem Messkopf 14 und insbesondere einer Vorderseite 22 des Messkopfs 14 detektiert werden soll.

An dem Messkopf 14 ist ein Empfänger 24 angeordnet, welcher von dem Zielobjekt 20 zurückreflektierte Mikrowellenstrahlung 26 empfängt.

Der Sender 16 und der Empfänger 24 sind jeweils Antennen. Es ist grundsätzlich möglich, dass der Sender 16 und der Empfänger 24 getrennte Antennen sind, d. h. der Sender 16 nur Sendefunktion hat und der Empfänger 24 nur Empfangsfunktion.

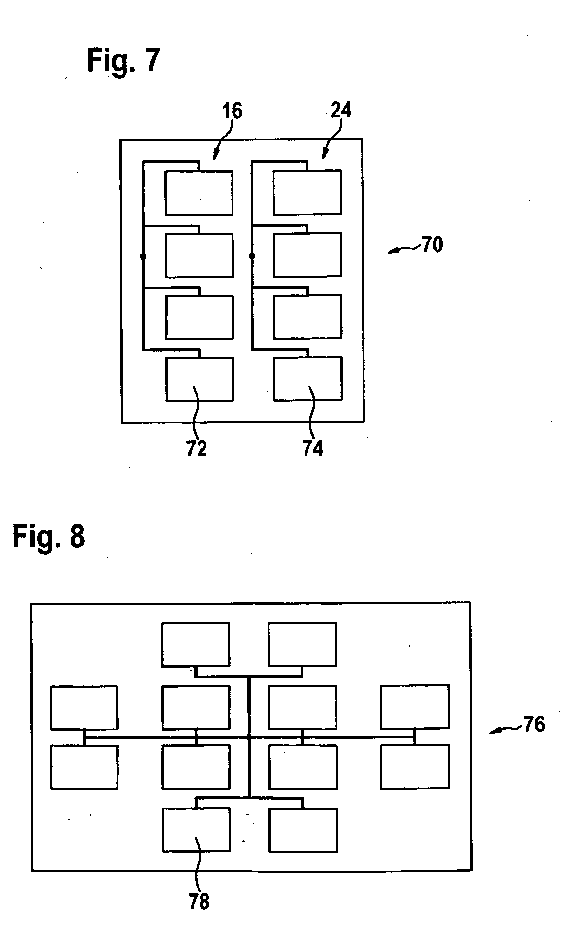

Bei einem Ausführungsbeispiel einer entsprechenden Sender-Empfänger-Einrichtung 70 (Figur 7) ist der Sender 16 durch eine Mehrzahl von Patchfeldern 72 gebildet, welche parallel zueinander angeordnet sind und von dem gleichen Sendesignal angesteuert werden. Der Empfänger 24 ist ebenfalls aus einer Mehrzahl von Patchzellen 74 gebildet, welche parallel zueinander angeordnet sind. Die Patchfelder 72 und 74 sind dabei vorzugsweise gleich ausgebildet und parallel angeordnet.

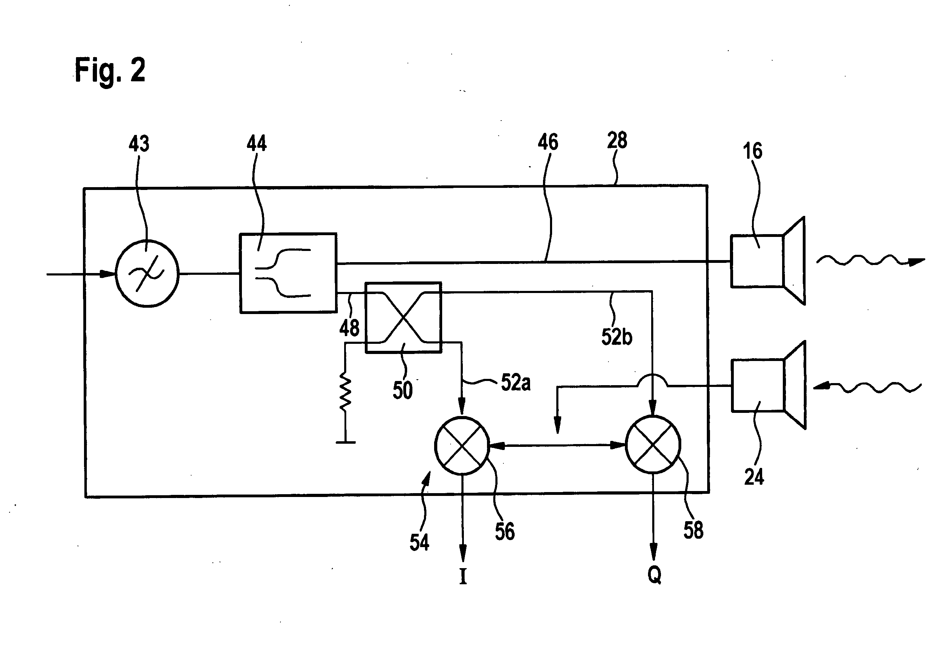

Bei einer alternativen Ausführungsform einer Sender-Empfänger-Einrichtung 76, welche in Figur 8 gezeigt ist und welche in Figur 2 in durchbrochenen Linien angedeutet ist, sind eine Mehrzahl von Patchfeldern 78 vorgesehen, welche parallel verschaltet sind. Diese Patchfelder 78 weisen sowohl Sendefunktion als auch Empfangsfunktion auf. Die Sender-Empfänger-Einrichtung 76 lässt sich platzsparend realisieren.

Die Sender-Empfänger-Einrichtung 70 mit getrenntem Sender 16 und getrenntem Empfänger 24 weist eine Übersprechrate auf (der Signalempfang, der darauf zurückzuführen ist, dass Mikrowellenstrahlung vom Sender 16 direkt vom Empfänger 24 empfangen wird), die kleiner ist als für die Sender-Empfänger-Einrichtung 76. Die sensorwirksame Fläche der Sender-Empfänger-Einrichtung 76, bei welcher die Patchfelder 78 sowohl Sendefunktion als auch Empfangsfunktion haben, ist groß. Allerdings ist die Übersprechrate bei der Sender-Empfänger-Einrichtung 76 auch groß.

Der Sender 16 ist über einen Transceiver 28 angesteuert, welcher auch Empfangssignale von dem Empfänger 24 empfängt und gegebenenfalls bearbeitet. Der Transceiver 28 (siehe auch Figur 2) stellt dem Sender 16 Steuersignale bereit.

Der Transceiver 28 stellt mindestens ein Mischungssignal einem Prozessor 30 (beispielsweise DSP) bereit. Es kann dabei fakultativ vorgesehen sein, dass zwischen dem Prozessor 30 und dem Transceiver 28 eine Signalaufbereitungseinrichtung 32 angeordnet ist, welche von dem Transceiver 28 bereitgestellte Signale zur besseren Verarbeitbarkeit durch den Prozessor 30 aufbereitet.

Der Prozessor 30 führt insbesondere Signalverarbeitungs- und Signalauswertungsvorgänge durch.

Er ist an eine Endstufe 34 angeschlossen, welche Anschlüsse 36 des Mikrowellen-Näherungssensors 10 aufweist. Die Anschlüsse 36 umfassen dabei Eingangsanschlüsse, insbesondere zur Spannungsversorgung, und mindestens einen Ausgangsanschluss. Es kann dabei ein analoger Ausgangsanschluss zur Bereitstellung eines analogen Abstandssignals und/oder ein digitaler Ausgangsanschluss zur Bereitstellung eines digitalen Abstandssignals vorgesehen sein. Es können weitere Ausgangsanschlüsse wie beispielsweise ein Busanschluss vorgesehen sein.

Es ist grundsätzlich auch möglich, dass ein Steuerungsanschluss vorgesehen ist.

Der Mikrowellen-Näherungssensor 10 umfasst eine Frequenzmodulationseinrichtung 38, durch die die Frequenz der über den Sender 16 ausgesandten Mikrowellenstrahlung linear (oder nichtlinear) modulierbar ist.

Die Frequenzmodulationseinrichtung 38 wiederum umfasst einen Funktionsgenerator wie beispielsweise einen Rampengenerator 40 (für lineare Modulation), welcher an den Prozessor 30 und einen spannungsgesteuerten Oszillator 43 (VCO) gekoppelt ist und diesen mit einer zeitlich variierenden Steuerspannung steuert. Der spannungsgesteuerte Oszillator 43 ist beispielsweise Teil des Transceivers 28 (Figur 2). Über die Einstellung der Spannung, mit welcher der spannungsgesteuerte Oszillator 43 angesteuert wird, lässt sich die Frequenz der emittierten Mikrowellenstrahlung einstellen. Die Ansteuerungsspannung wird wiederum von dem Rampengenerator 40 bereitgestellt.

Der spannungsgesteuerte Oszillator 43 wird beispielsweise im phase-lock-loop-Modus betrieben. Durch eine phase-lock-loop-Schaltung lässt sich die Ausgangsfrequenz sehr stabil halten und dabei temperaturunabhängig halten.

In dem Gehäuse 12 des Mikrowellen-Näherungssensors 10 ist eine als Ganzes mit 42 bezeichnete Auswertungseinrichtung angeordnet. Diese umfasst den Prozessor 30, den Transceiver 28, die Signalaufbereitungseinrichtung 32 und die Frequenzmodulationseinrichtung 38 (wobei beispielsweise ein Teil der Frequenzmodulationseinrichtung 38 auch in dem Prozessor 30 und/oder in dem Transceiver 28 realisiert sein kann).

Der Transceiver 28 weist, wie in Figur 2 schematisch gezeigt, dem spannungsgesteuerten Oszillator 43 nachgeordnet einen Splitter 44 auf, über den ein von dem spannungsgesteuerten Oszillator 43 geliefertes Sendesignal für den Sender 16 in einen Sendezweig 46 und einen Empfangszweig 48 aufteilbar ist. Die Aufteilung erfolgt dabei vorzugsweise derart, dass das aufgeteilte Sendesignal im Sendezweig 46 und im Empfangszweig 48 (im Letzteren vor der Weiterbearbeitung) die gleiche Signalstärke hat.

Der Transceiver 28 umfasst bei einer Ausführungsform den spannungsgesteuerten Oszillator 43, welcher an den Rampengenerator 40 gekoppelt ist und dem Splitter 44 vorgeschaltet ist. Der Oszillator 43 stellt das entsprechende Sendesignal für den Sender 16 bereit. Das Spannungssignal, welches den spannungsgesteuerten Oszillator 43 ansteuert, wird durch den Rampengenerator 40 bereitgestellt.

Bei einer Ausführungsform ist der Transceiver zweikanalig ausgebildet. Er stellt ein erstes Mischungssignal I und ein dazu phasenverschobenes zweites Mischungssignal Q bereit. In diesem Fall weist der Transceiver 28 einen Phasenschieber 50 auf, welcher insbesondere ein 90° Phasenschieber ist. An dem Phasenschieber wird aus dem gesplitteten Sendesignal ein erstes Signal 52a erzeugt und es wird ein zweites Signal 52b erzeugt, wobei die beiden Signale um 90° phasenverschoben sind.

Die beiden Signale 52a und 52b werden einer Mischungseinrichtung 54 mit einem ersten Mischer 56 und einem zweiten Mischer 58 bereitgestellt. Dort werden sie jeweils mit einem von dem Empfänger 24 bereitgestellten Empfangssignal gemischt. Es entstehen dabei ein erstes Mischungssignal I und ein zweites Mischungssignal Q. Die Mischungssignale I und Q werden von dem Transceiver 28 dem Prozessor 30 direkt oder über die Signalaufbereitungseinrichtung 32 bereitgestellt.

Das erste Mischungssignal I und das zweite Mischungssignal Q sind um 90° zueinander phasenverschoben.

Der Sender 16 sendet Mikrowellenstrahlung in einem Frequenzband im Frequenzbereich zwischen ca. 300 MHz bis 300 GHz (entsprechend einer Wellenlänge zwischen 1 m und 1 mm). Die ausgesandte Mikrowellenstrahlung ist frequenzmoduliert. Der Sendebetrieb ist insbesondere kontinuierlich, so dass kleine Sendeleistungen (beispielsweise in der Größenordnung 14 dBm EIRP) möglich sind. Der Betrieb des Mikrowellen-Näherungssensors 10 erfolgt nach einem FMCW-Verfahren (frequency modulated continuous wave).

Eine Hochfrequenzwelle, welche von dem Sender 16 zu einem Zeitpunkt $t_1$ abgestrahlt wird, hat die Frequenz $f_1$. Die elektromagnetische Welle wird von dem Zielobjekt 20 reflektiert und trifft nach einer Laufzeit $\tau$ am Zeitpunkt $t_2$ im Empfänger ein. Zu diesem späteren Zeitpunkt $t_2 = t_1 + \tau$ hat der durch den Rampengenerator 40 angesteuerte spannungsgesteuerte Oszillator 43 bereits eine höhere Frequenz $f_2$. Die Mischungseinrichtung 54 stellt (mindestens) ein zeitabhängiges Mischungssignal mit einer Differenzfrequenz

$$f_D = f_2 - f_1 = 2\,\frac{\Delta f}{T_{mod} \cdot c}\,s \qquad (1)$$

bereit. $\Delta f$ ist dabei der Frequenzhub $f_{max} - f_{min}$ zwischen der höchsten Frequenz $f_{max}$ und der tiefsten Frequenz $f_{min}$, $T_{mod}$ ist die Periode der Frequenzmodulation ($f_{mod} = 1/T_{mod}$ ist die Modulationsfrequenz) und $c$ ist die Lichtgeschwindigkeit. Wenn die Differenzfrequenz $f_D$ bekannt ist, dann kann aus (1) der Abstand $s$ zwischen dem Messkopf 14 und dem Zielobjekt 20 berechnet werden.

Die Frequenz $f_{mod}$ ist sehr viel kleiner als die Mikrowellenfrequenz. Beispielsweise liegt die Frequenz $f_{mod}$ in der Größenordnung von ca. 200 Hz und die Mikrowellenfrequenz ist um einen Faktor $10^4$ oder mehr größer als diese Modulationsfrequenz.

Wenn der Frequenzhub $\Delta f$ bei 200 MHz liegt, dann ergibt sich für einen Abstand von $s = 1$ m eine Differenzfrequenz $f_D = 320$ Hz.

Die Frequenz $f_D$ und die Frequenz $f_{mod}$ liegen damit in der gleichen Größenordnung. (Sie unterscheiden sich höchstens um einen Faktor 10.) Dies bedeutet, dass bei Abständen in der Größenordnung von 1 m (insbesondere bei Abständen unterhalb von 10 m) das zeitabhängige periodische Mischungssignal nur wenige Perioden aufweist oder unter Umständen nicht einmal eine vollständige Periode aufweist.

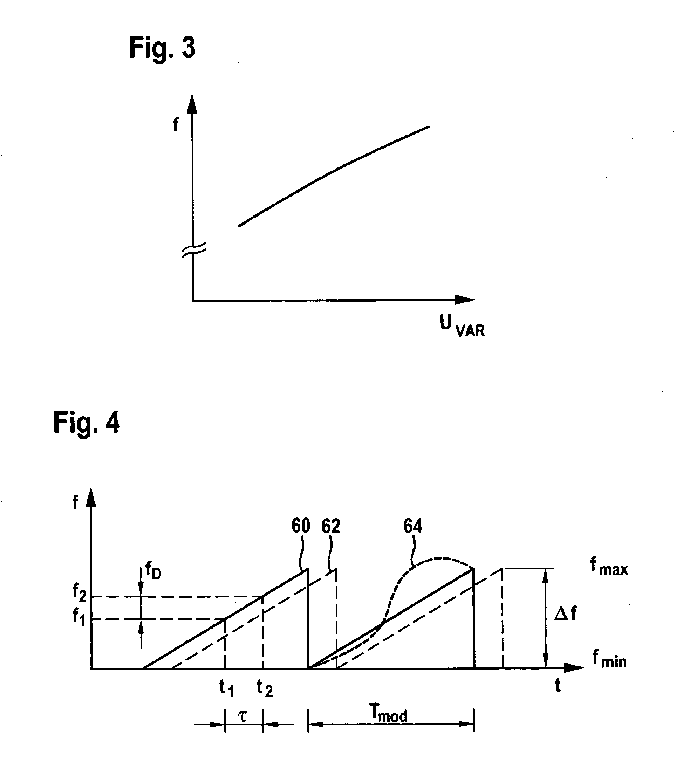

Der spannungsgesteuerte Oszillator 43 ist über den Rampengenerator 40 beispielsweise dreieckförmig und insbesondere sägezahnförmig angesteuert. Dies ist in Figur 4 schematisch gezeigt. Dort sind auch die entsprechenden Frequenzverhältnisse eingezeichnet. Gezeigt ist schematisch der Frequenzverlauf 60 für den spannungsgesteuerten Oszillator 43 und im Vergleich dazu ein hypothetischer Frequenzverlauf 62 für ein Empfangssignal.

Der Frequenzverlauf 60 ist dreieckförmig. Es ist dabei grundsätzlich möglich, dass der Rampengenerator 40 einen solchen Spannungsverlauf hat, dass eine zeitliche Kurvenform $f(t)$ erzeugt wird, welche eine mögliche Nichtlinearität des spannungsgesteuerten Oszillators 43 ausgleicht. Dies ist in Figur 4 durch das Bezugszeichen 64 angedeutet. In Kombination mit der Nichtlinearität des Oszillators 43 ergibt sich dann ein linearisierter Verlauf.

Eine minimale Frequenz ist ebenfalls eine Mikrowellenfrequenz und nicht Null. Beispielsweise beträgt der Frequenzhub $\Delta f$ zwischen maximaler Frequenz und minimaler Frequenz ca. 100 MHz.

Es ist grundsätzlich möglich, dass sich das Zielobjekt 20 während eines Messvorgangs bewegt. Aufgrund des Doppler-Effekts erhält man eine zusätzliche Frequenzverschiebung. Mit Hilfe eines dreieckförmigen Verlaufs mit ansteigender und abfallender Rampe (mit endlicher Steigung) der Spannung des Rampengenerators 40 kann eine Doppler-Kompensation vorgenommen werden.

Bei dem gezeigten Ausführungsbeispiel werden die um 90° phasenverschobenen Mischungssignale I und Q von dem Transceiver 28 zur weiteren Auswertung dem Prozessor 30 bereitgestellt. Durch Verwendung der Mischungssignale I und Q können Auslöschungen durch stehende Wellen vermieden werden. Es handelt sich dann um eine zweikanalige Auswertung.

Es ist auch grundsätzlich möglich, dass dem Prozessor 30 nur ein Mischungssignal bereitgestellt wird und der Prozessor 30 dann ein zweites "virtuelles" Mischungssignal aus dem ersten Mischungssignal berechnet, wobei das zweite Mischungssignal um 90° zu dem ersten Mischungssignal phasenverschoben ist.

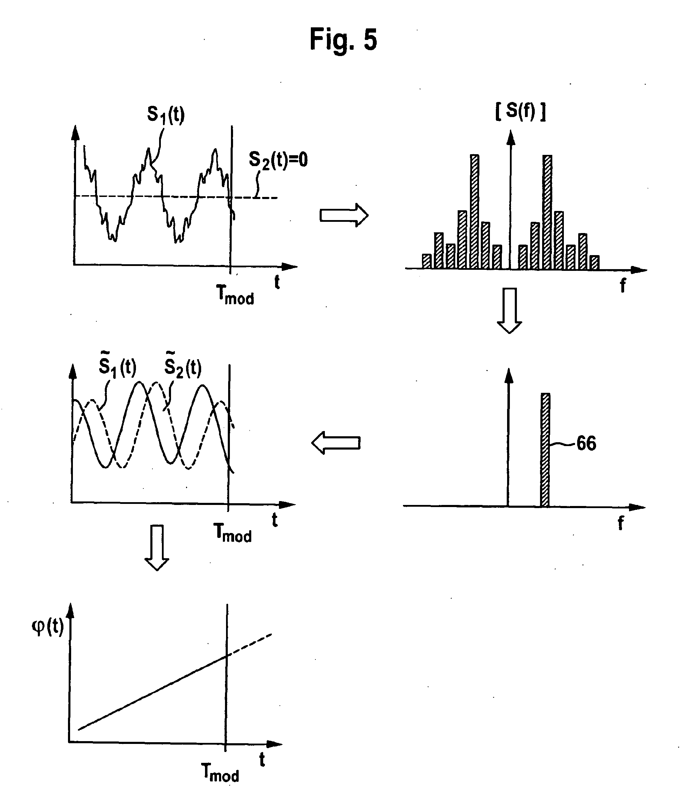

In Figur 5 sind schematisch Signalverläufe und Zwischenschritte bei der Auswertung dargestellt, wobei in dem gezeigten Ausführungsbeispiel der Transceiver 28 nur ein Mischungssignal bereitstellt bzw. nur ein von dem Transceiver 28 bereitgestelltes Mischungssignal weiter ausgewertet wird.

Das von dem Transceiver 28 bereitgestellte Mischungssignal $S_1(t)$ (eventuell nach Bearbeitung durch die Signalaufbereitungseinrichtung 32) ist in dem Diagramm links oben schematisch in seiner Zeitabhängigkeit gezeigt. Es ist nicht nur auf die Überlagerung mit Mikrowellenstrahlung, welche an dem Zielobjekt 20 reflektiert wird, zurückzuführen, sondern auch auf Rückreflexion an Nebenobjekten. Nach Erreichen der Periode $T_{mod}$ ist das Signal $S_1(t)$ abgehackt oder es weist einen Sprung auf.

Aus dem ersten Mischungssignal $S_1(t)$ kann rechnerisch ein zweites Mischungssignal $S_2(t)$ erzeugt werden. Dies kann durch entsprechende Transformation im Zeitraum erfolgen:

$$S_2(t) = H\,[S_1(t)] \qquad (2).$$

Die Transformation erfolgt derart, dass die Signal $S_1$ und $S_2$ um 90° phasenverschoben zueinander sind.

Die Transformation ist beispielsweise eine Hilbert-Transformation im Zeitraum:

$$H\,[S_1(t)] = S_2(t) = \frac{1}{\pi} \int_{-\infty}^{\infty} \frac{S_1(\tau)}{t - \tau}\, d\tau \qquad (3)$$

Die Hilbert-Transformation ist besonders vorteilhaft, wenn keine vollständige Periode des Mischungssignals $S_1(t)$ vorliegt oder wenn nur wenige Perioden vorliegen.

Aus dem Signal $S_1(t)$ wird das Frequenzspektrum S(f) berechnet. Aus dem Frequenzspektrum wird eine Hauptfrequenz beispielsweise als diejenige Frequenz, welche das größte Amplituden im Frequenzspektrum hat, bestimmt. Dies erfolgt durch einen Filter 67, welcher beispielsweise softwaremäßig im Prozessor 30 realisiert ist. Das Signal mit der Hauptfrequenz ist mit dem Bezugszeichen 66 gezeigt. Das rücktransformierte Mischungssignal $\tilde{S}_1(t)$ (und auch $\tilde{S}_2(t)$) mit der Hauptfrequenz 66 entspricht dem Mischungssignal, welches mit der Frequenz $f_D$ schwingt.

Die modifizierten, um Störungen bereinigten Signale $\tilde{S}_1(t)$ und $\tilde{S}_2(t)$ sind gezeigt. Das Verhältnis ergibt sich zu:

$$\frac{\tilde{S}_2(t)}{\tilde{S}_1(t)} = \tan\,(2\pi\, f_D t) \qquad (4)$$

Aus der Phase

$$\varphi(t) = 2\pi\, f_D t = \arctan\left[\frac{\tilde{S}_2(t)}{\tilde{S}_1(t)}\right] \qquad (5)$$

erhält man die Frequenz als zeitliche Ableitung $\dfrac{d\varphi}{dt}$, aus der wiederum über Formel 1 der Abstand s berechnet werden kann.

Das oben beschriebene Verfahren eignet sich wie erwähnt dazu, um auch Mischungssignale auswerten zu können, die nur über wenige Perioden schwingen oder nicht über eine volle Periode schwingen.

Das Frequenzspektrum erhält man aus dem Signal $S_1(t)$ beispielsweise über Fouriertransformation (und insbesondere Fast-Fouriertransformation). Die Rückrechnung ergibt sich entsprechend durch inverse Fouriertransformation.

Die Formel (3) beschreibt die Hilbert-Transformation im Zeitraum. Es ist alternativ auch möglich, dass die Hilbert-Transformation im Frequenzraum durchgeführt wird. Dazu wird zunächst aus dem Signal $S_1(t)$ das Frequenzspektrum $S_1(f)$ berechnet. Durch Hilbert-Transformation im Frequenzraum wird unter Ausfilterung von negativen Frequenzen das Frequenzspektrum $S_2(f)$ berechnet. Durch Rücktransformation in dem Zeitraum erhält man die Signale $\tilde{S}_1(t)$ und $\tilde{S}_2(t)$, wobei das Mischungssignal $\tilde{S}_2(t)$ ein synthetisches, berechnetes Mischungssignal ist.

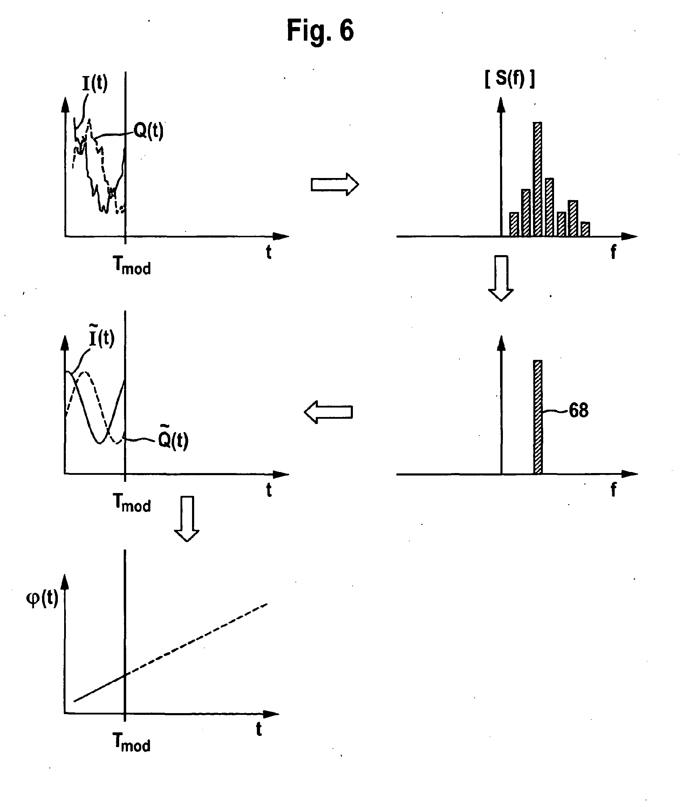

In Figur 6 ist eine ähnliche Auswertung gezeigt, wenn durch den Transceiver 28 ein erstes Mischungssignal I und ein zweites Mischungssignal Q bereitgestellt wird (zweikanalige Auswertung). Es erfolgt wiederum eine Fourier-Transformation zur Ermittlung des Frequenzspektrums und Auswahl einer Hauptfrequenz 68. Aus der Hauptfrequenz werden modifizierte Mischungssignale $\tilde{I}(t)$, $\tilde{Q}(t)$ berechnet, welche um Störsignale korrigiert sind.

Aus diesen wiederum lässt sich durch Verhältnisbildung die Phase berechnen

$$\varphi(t) = 2\pi\, f_D t = \arctan\left[\frac{\tilde{Q}(t)}{\tilde{I}(t)}\right] \qquad (6)$$

Bei der erfindungsgemäßen Lösung lässt durch einen kontinuierlichen Sendebetrieb eine kleine Sendeleistung erreichen. Es ist keine Messung von kurzen Zeiten notwendig. Wenn genügend Intensität zurückreflektiert wird, kann grundsätzlich jegliche Art von Zielobjekt 20 verwendet werden. Der Stromverbrauch des Mikrowellen-Näherungssensors 10 ist relativ gering. Die Schaltung lässt sich auch relativ einfach aufbauen, da insbesondere keine kurzen Zeiten gemessen werden müssen.

Aus der Phase des Verhältnisses von zwei um 90° zueinander verschobenen Signalen lässt sich auf einfache Weise der Abstand s ermitteln, auch wenn die Differenzfrequenz $f_D$ die gleiche Größenordnung wie die Modulationsfrequenz $f_{mod}$ hat. Auch wenn innerhalb der Periode $T_{mod}$ nur wenige Perioden des Mischungssignals (bzw. bei einer zweikanaligen Auswertung auch des zweiten Mischungssignals) vorhanden sind oder sogar wenn keine vollständige Periode vorhanden ist, lässt sich die Differenzfrequenz $f_D$ und damit der Abstand ermitteln.

Mit dem erfindungsgemäßen Mikrowellen-Näherungssensor lassen sich Abstände ca. unterhalb 15 m bestimmen. Ein vorteilhafter Abstands-Messbereich hat seine obere Grenze bei ca. 2 m und 10 m, wobei eine Auflösung in der Größenordnung von 3 mm bis 4 mm oder besser erzielbar ist.

Der erfindungsgemäße Mikrowellen-Näherungssensor ist beispielsweise einsetzbar, um die Bewegung und/oder Position eines Kolbens eines Hydraulikzylinders zu detektieren. In diesem Fall ist das Zielobjekt 20 der Kolben. In diesem Falle ist der Mikrowellen-Näherungssensor innerhalb eines Zylindergehäuses angeordnet. Das von dem Mikrowellensensor erzeugte Mikrowellenfeld kann ein metallisches Zylindergehäuse nicht durchdringen. Die Arbeitsfrequenz ist dadurch grundsätzlich frei wählbar.

**Patentansprüche**

1.	Mikrowellen-Näherungssensor, umfassend einen Messkopf (14) mit einem Sender (16) für Mikrowellenstrahlung, wobei der Sender (16) eine solche Leistung aufweist, dass Abstände zwischen Messkopf (14) und Zielobjekt (20) unterhalb von 15 m detektierbar sind, und einen Empfänger (24) für an einem Zielobjekt (20) reflektierte Mikrowellenstrahlung, eine Frequenzmodulationseinrichtung (38), mit welcher die Frequenz von über den Sender (16) emittierter Mikrowellenstrahlung modulierbar ist, und eine Auswertungseinrichtung (42) mit einer Mischungseinrichtung (54), durch welche mindestens ein Mischungssignal (I, Q; $S_1$) aus einem Sendesignal und einem Empfangssignal erzeugbar ist, wobei durch Auswertung des mindestens einen Mischungssignals (I, Q; $S_1$) ein Abstand (s) zwischen dem Messkopf (14) und dem Zielobjekt (20) berechenbar ist,

	**dadurch gekennzeichnet, dass** die Auswertungseinrichtung aus dem mindestens einen Mischungssignal (I, Q; $S_1$) das Frequenzspektrum (S(f)) berechnet, dass die Auswertungseinrichtung (42) einen Filter (67) aufweist, durch den mindestens ein Mischungssignal ($\tilde{I}$, $\tilde{Q}$; $\tilde{S}_1$) mit einer Hauptfrequenz (66; 68) ausfilterbar ist, wobei das mindestens eine Mischungssignal ($\tilde{I}$, $\tilde{Q}$; $\tilde{S}_1$) mit der Hauptfrequenz (66; 68) ein Signal mit der größten Amplitude im Frequenzspektrum ist und dass die Auswertungseinrichtung (42) so ausgebildet ist, dass sie eine Phase ($\varphi$) eines Verhältnisses eines ersten Mischungssignals (I; $S_1$) und eines zweiten Mischungssignals (Q; $S_2$) nach Rücktransformation in den Zeitraum bestimmt, wobei das erste Mischungssignal (I; $S_1$) und das zweite Mischungssignal (Q; $S_2$) phasenverschoben sind, und der Abstand (s) zwischen dem Messkopf (14) und dem Zielobjekt (20) aus der Phase ($\varphi$) bestimmt wird.

2.	Mikrowellen-Näherungssensor nach Anspruch 1, **dadurch gekennzeichnet, dass** eine minimale Frequenz ($f_{min}$) und eine maximale Frequenz ($f_{max}$) der gesendeten Mikrowellenstrahlung im Bereich zwischen 300 MHz bis 300 GHz liegt und insbesondere die maximale Frequenz ($f_{max}$) der gesendeten Mikrowellenstrahlung in einem ISM-Band liegt.

3.	Mikrowellen-Näherungssensor nach einem der vorangehenden Ansprüche, **dadurch gekennzeichnet, dass** die Frequenz ($f_{mod}$) der Frequenzmodulation mindestens um einen Faktor $10^4$ kleiner ist als die maximale Frequenz der gesendeten Mikrowellenstrahlung.

4.	Mikrowellen-Näherungssensor nach einem der vorangehenden Ansprüche, **gekennzeichnet durch** einen Transceiver (28), welcher dem Sender (16) Steuersignale bereitstellt und insbesondere das mindestens eine Mischungssignal (I, Q; $S_1$) bereitstellt.

5.	Mikrowellen-Näherungssensor nach Anspruch 4, **dadurch gekennzeichnet, dass** der Transceiver (28) einen Splitter (44) aufweist, mittels welchem Sendesignale auf einen Sendezweig (46) und einen Empfangszweig (48) aufteilbar sind.

6.	Mikrowellen-Näherungssensor nach einem der vorangehenden Ansprüche, **dadurch gekennzeichnet, dass** das erste Mischungssignal (I) und das zweite Mischungssignal (Q) durch jeweilige Mischung eines Ausgangssignals und eines Empfangssignals erzeugt sind, welche um 90° phasenverschoben zueinander sind, oder das zweite Mischungssignal ($S_2$) aus dem ersten Mischungssignal ($S_1$) erzeugt ist und insbesondere das zweite Mischungssignal ($S_2$) die Hilbert-Transformierte des ersten Mischungssignals ($S_1$) ist.

7. Verfahren zur Ermittlung des Abstands zwischen einem Messkopf (14) eines Mikrowellen-Näherungssensors (10) und einem Zielobjekt (20), bei dem über den Messkopf (14) frequenzmodulierte Mikrowellenstrahlung in Richtung des Zielobjekts (20) emittiert wird und reflektierte Mikrowellenstrahlung vom Messkopf (14) detektiert wird, wobei ein Sendesignal und ein Empfangssignal zu mindestens einem Mischungssignal (I, Q; $S_1$) gemischt werden und aus dem mindestens einen Mischungssignal (I, Q; $S_1$) der Abstand (s) bestimmt wird, **dadurch gekennzeichnet, dass** aus dem mindestens einen Mischungssignal (I, Q; $S_1$) das Frequenzspektrum (S(f)) berechnet wird und eine Hauptfrequenz (66; 68) des mindestens einen Mischungssignals (I, Q; $S_1$) bestimmt wird, wobei das mindestens eine Mischungssignal (I, Q; $S_1$) bei der Hauptfrequenz (66; 68) ein Signal mit der größten Amplitude im Frequenzspektrum ist, dass ein erstes Mischungssignal (I; $S_1$) und ein zweites Mischungssignal (Q; $S_2$) erzeugt werden, welche zueinander phasenverschoben sind und dass die Phase ($\varphi$) eines Verhältnisses des ersten Mischungssignals (I; $S_1$) und des zweiten Mischungssignals (Q; $S_2$) nach Rücktransformation in den Zeitraum bestimmt wird und aus der Phase ($\varphi$) der Abstand (s) zwischen dem Messkopf (14) und dem Zielobjekt (20) berechnet wird.

8. Verfahren nach Anspruch 7, **dadurch gekennzeichnet, dass** sowohl das erste Mischungssignal (I) als auch das zweite Mischungssignal (Q) durch Mischung des Sendesignals und Empfangssignals erzeugt werden oder das zweite Mischungssignal ($S_2$) rechnerisch aus dem ersten Mischungssignal ($S_1$) erzeugt wird.

9. Verfahren nach Anspruch 8, **dadurch gekennzeichnet, dass** das zweite Mischungssignal ($S_2$) durch Hilbert-Transformation aus dem ersten Mischungssignal ($S_1$) bestimmt wird, wobei insbesondere die Hilbert-Transformation im Zeitraum oder Frequenzraum durchgeführt wird.

**Claims**

1. Microwave proximity sensor, comprising a measuring head (14) with a transmitter (16) for microwave radiation, the power of the transmitter (16) being such that distances of less than 15 m between measuring head (14) and target (20) are detectable, and a receiver (24) for microwave radiation reflected at a target (20), a frequency modulation device (38) with which the frequency of microwave radiation emitted via the transmitter (16) can be modulated, and an evaluation device (42) with a mixing device (54) by which at least one mixed signal (I, Q; $S_1$) can be generated from a transmit signal and a receive signal, a distance (s) between the measuring head (14) and the target (20) being calculatable by evaluating the at least one mixed signal (I, Q; $S_1$),
**characterized in that** the evaluation device calculates the frequency spectrum (S(f)) from the at least one mixed signal (I, Q; $S_1$), **in that** the evaluation device (42) comprises a filter (67) by which at least one mixed signal ($\tilde{I}$, $\tilde{Q}$; $\tilde{S}_1$) with a main frequency (66; 68) can be filtered out, the at least one mixed signal ($\tilde{I}$, $\tilde{Q}$; $\tilde{S}_1$) with the main frequency (66; 68) being a signal with the largest amplitude in the frequency spectrum, and **in that** the evaluation device (42) is configured such that it determines a phase ($\varphi$) of a relationship of a first mixed signal (I; $S_1$) and a second mixed signal (Q; $S_2$) after transformation back into the time domain, the first mixed signal (I; $S_1$) and the second mixed signal (Q; $S_2$) being phase-shifted, and the distance (s) between the measuring head (14) and the target (20) being determined from the phase ($\varphi$).

2. Microwave proximity sensor in accordance with claim 1, **characterized in that** a minimum frequency ($f_{min}$) and a maximum frequency ($f_{max}$) of the transmitted microwave radiation lie in the range between 300 MHz and 300 GHz and, in particular, the maximum frequency ($f_{max}$) of the transmitted microwave radiation lies in an ISM band.

3. Microwave proximity sensor in accordance with any one of the preceding claims, **characterized in that** the frequency ($f_{mod}$) of the frequency modulation is smaller than the maximum frequency of the transmitted microwave radiation by at least a factor $10^4$.

4. Microwave proximity sensor in accordance with any one of the preceding claims, **characterized by** a transceiver (28) which provides the transmitter (16) with control signals and, in particular, provides the at least one mixed signal (I, Q; $S_1$),

5. Microwave proximity sensor in accordance with claim 4, **characterized in that** the transceiver (28) comprises a splitter (44) by means of which transmit signals can be divided up onto a transmit branch (46) and a receive branch (48).

6. Microwave proximity sensor in accordance with any one of the preceding claims, **characterized in that** the first mixed signal (I) and the second mixed signal (Q) are generated by respectively mixing an output signal and a receive signal, which are phase-shifted in relation to each other by 90°, or the second mixed signal ($S_2$) is generated from the first mixed signal ($S_1$) and, in particular, the second mixed signal ($S_2$) is the Hilbert transform of the first mixed signal ($S_1$),

7. Method for determining the distance between a measuring head (14) of a microwave proximity sensor (10) and a target (20), wherein frequency-modulated microwave radiation is emitted in the direction of the target (20) via the measuring head (14) and reflected microwave radiation is detected by the measuring head (14), and wherein a transmit signal and a receive signal are mixed to form at least one mixed signal (I, Q; $S_1$) and the distance (s) is determined from the at least one mixed signal (I, Q; $S_1$), **characterized in that** the frequency spectrum (S(f)) is calculated from the at least one mixed signal (I, Q; $S_1$) and a main frequency (66; 68) of the at least one mixed signal (I, Q; $S_1$) is determined, the at least one mixed signal (I, Q; $S_1$) at the main frequency (66; 68) being a signal with the largest amplitude in the frequency spectrum, **in that** a first mixed signal (I; $S_1$) and a second mixed signal (Q; $S_2$) are generated, which are phase-shifted in relation to each other, and **in that** the phase ($\varphi$) of a relationship of the first mixed signal (I; $S_1$) and the second mixed signal (Q; $S_2$) is determined after transformation back into the time domain, and the distance (s) between the measuring head (14) and the target (20) is calculated from the phase ($\varphi$).

8. Method in accordance with claim 7, **characterized in that** both the first mixed signal (I) and the second mixed signal (Q) are generated by mixing the transmit signal and the receive signal or the second mixed signal ($S_2$) is generated by calculation from the first mixed signal ($S_1$),

9. Method in accordance with claim 8, **characterized in that** the second mixed signal ($S_2$) is determined by Hilbert transformation from the first mixed signal ($S_1$), and, in particular, the Hilbert transformation is carried out in the time domain or frequency domain.

## Revendications

1. Détecteur de proximité à micro-ondes, comprenant une tête de mesure (14) avec un émetteur (16) de rayonnement micro-onde, l'émetteur (16) présentant une puissance rendant détectables des distances inférieures à 15 m entre tête de mesure (14) et objet-cible (20), et un récepteur (24) de rayonnement micro-onde réfléchi par un objet-cible (20), un dispositif de modulation de fréquence (38) au moyen duquel la fréquence du rayonnement micro-onde émis par l'émetteur (16) est modulable, et un dispositif d'analyse (42) avec un dispositif de mixage (54) au moyen duquel au moins un signal de mixage (I, Q ; $S_1$) peut être généré à partir d'un signal d'émission et d'un signal de réception, une distance (s) entre la tête de mesure (14) et l'objet-cible (20) pouvant être calculée par analyse du ou des signaux de mixage (I, Q ; $S_1$),
**caractérisé en ce que** le dispositif d'analyse calcule le spectre fréquentiel (S(f)) à partir du ou des signaux de mixage (I, Q ; $S_1$), **en ce que** le dispositif d'analyse (42) comporte un filtre (67) au moyen duquel le ou les signaux de mixage ($\tilde{I}$, $\tilde{Q}$ ; $\tilde{S}_1$) peuvent être filtrés avec une fréquence principale (66 ; 68), le ou les signaux de mixage ($\tilde{I}$, $\tilde{Q}$ ; $\tilde{S}_1$) avec la fréquence principale (66 ; 68) étant un signal ayant l'amplitude maximale dans le spectre fréquentiel, et **en ce que** le dispositif d'analyse (42) est prévu pour déterminer une phase ($\varphi$) d'un rapport entre un premier signal de mixage (I ; $S_1$) et un deuxième signal de mixage (Q ; $S_2$) après transformation inverse dans le temps, le premier signal de mixage (I ; $S_1$) et le deuxième signal de mixage (Q ; $S_2$) étant en décalage de phase, et la distance (s) entre la tête de mesure (14) et l'objet-cible (20) étant déterminée à partir de la phase ($\varphi$).

2. Détecteur de proximité à micro-ondes selon la revendication 1, **caractérisé en ce qu'**une fréquence minimale ($f_{min}$) et une fréquence maximale ($f_{max}$) du rayonnement micro-onde émis sont comprises entre 300 MHz et 300 GHz, et en particulier **en ce que** la fréquence maximale ($f_{max}$) du rayonnement micro-onde émis est comprise dans une bande ISM.

3. Détecteur de proximité à micro-ondes selon l'une des revendications précédentes, **caractérisé en ce que** la fréquence ($f_{mod}$) de la modulation de fréquence est inférieure d'au moins un facteur $10^4$ à la fréquence maximale du rayonnement micro-onde émis.

4. Détecteur de proximité à micro-ondes selon l'une des revendications précédentes, **caractérisé par** un émetteur-récepteur (28) transmettant des signaux de commande à l'émetteur (16), et transmettant en particulier le ou les signaux de mixage (I, Q ; $S_1$).

5. Détecteur de proximité à micro-ondes selon la revendication 4, **caractérisé en ce que** l'émetteur-récepteur (28) comporte un répartiteur (44) au moyen duquel des signaux d'émission peuvent être répartis sur une voie d'émission (46) et une voie de réception (48).

6. Détecteur de proximité à micro-ondes selon l'une des revendications précédentes, **caractérisé en ce que** le premier signal de mixage (I) et le deuxième signal de mixage (Q) sont générés par mixage respectif d'un signal de sortie et d'un signal de réception en décalage de phase de 90 ° l'un par rapport à l'autre, ou **en ce que** le deuxième signal de mixage ($S_2$) est généré à partir du premier signal de mixage ($S_1$), et en particulier **en ce que** le deuxième signal de mixage ($S_2$) est la transformée de Hilbert du premier signal de mixage ($S_1$).

7. Procédé de détermination de la distance entre une tête de mesure (14) d'un détecteur de proximité à micro-ondes (10) et d'un objet-cible (20), où un rayonnement micro-onde modulé en fréquence est émis vers l'objet-cible (20) au moyen de la tête de mesure (14) et le rayonnement micro-onde réfléchi est détecté par la tête de mesure (14), un signal d'émission et un signal de réception étant mélangés pour former au moins un signal de mixage (I, Q ; $S_1$), et la distance (s) étant déterminée à partir du ou des signaux de mixage (I, Q ; $S_1$), **caractérisé en ce que** le spectre fréquentiel (S(f)) est calculé à partir du ou des signaux de mixage (I, Q ; $S_1$), et une fréquence principale (66 ; 68) du ou des signaux de mixage (I, Q ; $S_1$) est déterminée, le ou les signaux de mixage (I, Q ; $S_1$) avec la fréquence principale (66 ; 68) étant un signal ayant l'amplitude maximale dans le spectre fréquentiel, **en ce qu'**un premier signal de mixage (I ; $S_1$) et un deuxième signal de mixage (Q ; $S_2$) sont générés, lesquels sont en décalage de phase l'un par rapport à l'autre, et **en ce que** la phase ($\varphi$) d'un rapport entre le premier signal de mixage (I ; $S_1$) et le deuxième signal de mixage (Q ; $S_2$) est déterminée après transformation inverse dans le temps, et la distance (s) entre la tête de mesure (14) et l'objet-cible (20) déterminée à partir de la phase ($\varphi$).

8. Procédé selon la revendication 7, **caractérisé en ce que** le premier signal de mixage (I) ainsi que le deuxième signal de mixage (Q) sont générés par mixage du signal d'émission et du signal de réception, ou **en ce que** le deuxième signal de mixage ($S_2$) est généré par calcul à partir du premier signal de mixage ($S_1$).

9. Procédé selon la revendication 8, **caractérisé en ce que** le deuxième signal de mixage ($S_2$) est déterminé par transformation de Hilbert du premier signal de mixage ($S_1$), la transformation de Hilbert étant en particulier effectuée dans le temps ou dans le champ fréquentiel.

Fig. 1

**Fig. 2**

EP 2 031 416 B1

## Fig. 3

## Fig. 4

# Fig. 5

# Fig. 6

EP 2 031 416 B1

**Fig. 7**

**Fig. 8**

19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004062801 A1
- DE 19833220 A1
- DE 10205904
- DE 19903183 A1
- DE 19807593 A1
- EP 1000314 B1
- DE 4104792 A1
- DE 102004041821 A1

- DE 19533125 C1
- US 6085151 A
- DE 4244608 A1
- EP 1329740 A2
- US 5596325 A
- WO 9512824 A
- DE 4229916 A1
- JP 08186447 B